# EUROPEAN PATENT APPLICATION

(11) **EP 2 432 162 A1**
(43) Date of publication of application: **21.03.2012**
(21) Application number: 10788756.4
(22) Date of filing: 12.05.2010
(51) Int. Cl.: H04L 12/26, H04L 12/24, H04Q 1/20

(54) **METHOD AND DEVICE FOR OBTAINING ALARM SOLUTION**

(30) Priority: 18.06.2009 CN 200910087095
(71) Applicant: ZTE Corporation, Shenzhen, Guangdong 518057 (CN)
(72) Inventor: HU, Chenggang, Shenzhen Guangdong 518057 (CN)
(74) Representative: Petraz, Gilberto Luigi
(86) International application number: PCT/CN2010/072681
(87) International publication number: WO 2010/145360

(57) **Abstract**

The present invention provides a method and a device for obtaining an alarm solution, wherein the source alarm of the alarm currently examined is found according to the preset correlations among alarms (100), and the alarm solution corresponding to the found source alarm is used as the solution for the alarm currently examined (101), thus accurate locating for the alarm is assured, so that the maintainers are enabled to eliminate the alarm quickly by using a correct solution. In the method of the invention, the alarm locating is completed automatically, which not only improves the efficiency of problem processing, but also increases the accuracy of problem processing. For the network manager, the problem that the maintainers are required to know professional detail knowledge about software and hardware is avoided, and the problem of alarm processing is solved quickly and accurately.

## Description

### Technical Field

The present invention relates to a base station network management system, especially to a method and device for obtaining an alarm solution.

### Background of the Related Art

Alarm system is part and parcel of the base station network management system, maintainers discriminates a current running status of the base station according to the alarm condition generated by an alarm system. After generating one alarm, the maintainers can solve the problem according to the alarm solution corresponding to the alarm.

At present, obtaining the alarm solution is to display all the solution for various conditions which lead to the current alarm to the users, the users locate the problems according to the prompt of the solution and find the alarm solution. An existing method of obtaining the alarm solution is illustrated by one example. Assuming the base station generates 5 alarms, which are: {RRU clock chip loss-of-lock, RRU system clock loss-of-lock, RRU reference clock loss-of-lock, RRU frame frequency abnormal, BBU system clock loss-of-lock}, respectively, these several alarms constitute one alarm pool. When the users examine the alarm solution of RRU clock chip loss-of-lock, according to the method of obtaining an alarm solution at present, the following content will be displayed:
the reasons which lead to RRU clock chip loss-of-lock are as below:
   1) RRU system clock loss-of-lock, the solution for RRU system clock loss-of-lock;
   2) RRU reference clock loss-of-lock, the solution for RRU reference clock loss-of-lock;
   3) RRU clock reference source deterioration, the solution for RRU clock reference source deterioration;
   4) Optical interface LOS alarm, the solution for optical interface LOS alarm;
   5) BBU system clock loss-of-lock, the solution for BBU system clock loss-of-lock;
   6) BBU reference clock loss-of-lock, the solution for BBU reference clock loss-of-lock.

The users locate the problems from the solutions of the foregoing displayed 1)-6) conditions which will lead to the current RRU clock chip loss-of-lock alarm and find an alarm solution.

With regard to this, the users are not only required to be patient enough, but also to know technical terms. As for manual locating alarm solution, the users possibly ignore one piece of the alarm information, it will cause the final obtained solution being wrong, so that the wrong solution is applied for the recovery of the alarm, which will cause some board computers to be reset, even the whole service flow to be interrupted, thus the loss will be large.

### Summary of the Invention

In view of this, the major objective of the present invention is to provide a method and a device for obtaining an alarm solution, so an alarm solution can be obtained accurately and quickly.

To achieve the foregoing objective, the technical solution of the present invention is realized as such:
A method for obtaining an alarm solution, wherein the correlations indicating the causality among the alarms are preset, the method further comprises:
   searching for a source alarm corresponding to an alarm currently examined according to the correlations, and using the alarm solution corresponding to the searched source alarm as a solution for the alarm currently examined.

The way of presetting the correlations indicating the causality among alarms is:
judging whether the generation of the alarm is caused by other alarms according to the reason which causes the generation of each alarm, if yes, then setting correlations between the alarm and other alarms which lead to this alarm.

The correlations are indicated by means of a relation table.

The way of searching for a source alarm corresponding to an alarm currently examined is:
searching for an alarm which has a correlation with the alarm currently examined according to the correlations, and judging whether the searched alarm is in the current alarm pool, if yes, then continuing to search for an alarm which has the correlation with the searched alarm, until the searched alarm is not existed in the current alarm pool at last, and thus determining that the source alarm is the last searched alarm.

The number of the source alarms is one or more than one.

Before the method, a step of setting a correspondence relationship between an alarm and its corresponding alarm solution is further comprised.

A device for obtaining an alarm solution, comprising a setting module, a locating module, a judging module and an alarm solution generating module, wherein,
the setting module is used for storing the correlations indicating the causality among the alarms;
the locating module is used for searching for an alarm which relates to an alarm currently examined according to the correlations stored in the setting module, and outputting the related alarm to the judging module; or searching for an alarm which relates to the current related alarm when receiving the existence notification, and outputting the related alarm to the judging module;
the judging module is used for judging whether the received related alarm is existed in an alarm pool to which the alarm currently examined belongs, if yes, transmitting the existence notification to the locating module; if not, transmitting inexistence notification to the alarm solution generating module;
the alarm solution generating module is used for determining the current related alarm as the source alarm when receiving inexistence notification, and using the alarm solution corresponding to the searched source alarm as the solution for the alarm currently examined to output.

The correlations are indicated by means of a relation table.

The number of the source alarms is one or more than one.

From the technical solution provided in the above present invention, it can be seen that the correspondence relationship between an alarm and its corresponding alarm solution is preset in the alarm solution generating module. With the preset correlations among the alarms, a source alarm of an alarm currently examined is found, and the alarm solution corresponding to the found source alarm is used as the solution for the alarm currently examined, thus accurate locating for the alarm is assured, so that the maintainers are enabled to eliminate the alarm quickly by using a correct solution. In the method of the invention, the alarm locating is completed automatically, which not only improves the efficiency of problem processing, but also increases the accuracy of problem processing. For the network manager, the problem that the maintainers are required to know professional detail knowledge about software and hardware is avoided, and the problem of alarm processing is solved quickly and accurately.

### Brief Description of Drawings

FIG. 1 is a flow chart of method of obtaining an alarm solution of the invention;
FIG. 2 is a schematic diagram of the correlations between alarm A and alarm B;
FIG. 3 is a schematic diagram of the correlations of alarm A ∼ alarm J;
FIG. 4 is a schematic diagram of the component and structure of the device for obtaining an alarm solution of the invention;
FIG. 5 is a schematic diagram of the correlations of an embodiment for obtaining an alarm solution of the invention.

### Preferred Embodiments of the Present Invention

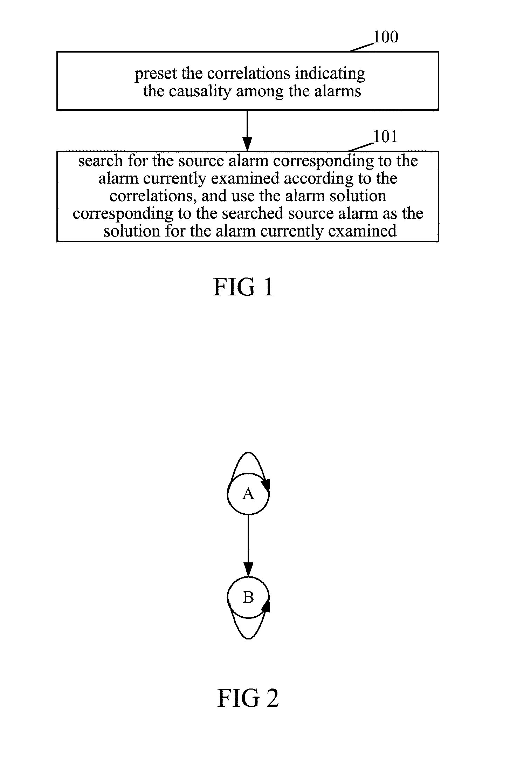

FIG 1 is a flow chart of method of obtaining an alarm solution of the invention, as shown in FIG 1, comprises:
Step 100: presetting the correlations indicating causality among alarms.

According to the reasons which cause the generation of each alarm, i.e. whether the generation of the alarm is caused by other alarms, if yes, then the correlations are set between this alarm and other alarms which lead to this alarm.

Assuming there are alarm A and alarm B: the generation of alarm A will certainly cause the generation of alarm B, but the generation of alarm B will not cause the generation of alarm A, the generation of alarm B may be caused by its own problem, the generation of alarm A may be caused by its own problem, the relation between alarm A and alarm B is shown as FIG 2, FIG 2 is a schematic diagram of the correlation between alarm A and alarm B, the arrow from alarm A to alarm B in FIG 2 indicates that alarm A leads to alarm B, and the arrow from alarm B to itself indicates that a fault of alarm B itself causes alarm B, the arrow from alarm A to itself indicates that a fault of alarm A itself causes alarm A.

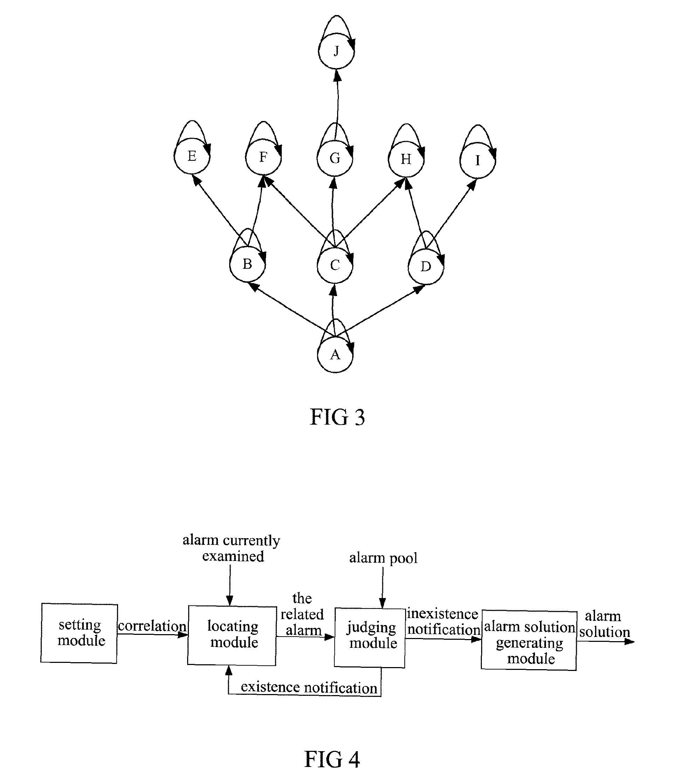

FIG 3 is a schematic diagram of the correlations of alarm A - alarm J, as shown in FIG 3, the relationships among alarm A, alarm B, alarm C, alarm D, alarm E, alarm F, alarm G, alarm H, alarm I, alarm J are as follows: the generation of alarm A will cause the generation of alarm B, alarm C, alarm D, the generation of alarm B will cause the generation of alarm E and alarm F, the generation of alarm C will cause the generation of alarm F, alarm G, alarm H, the generation of alarm D will cause the generation of alarm H and alarm I, the generation of alarm G will cause the generation of alarm J.

Step 101: searching for a source alarm corresponding to an alarm currently examined according to the correlations, and using the alarm solution corresponding to the searched source alarm as a solution for the alarm currently examined.

Searching for an alarm which has a correlation with an alarm currently examined, and judging whether the searched alarm exists in a current alarm pool, if yes, then continuing to search for an alarm which has the correlation with the searched alarm, until the last searched alarm does not exist in the current alarm pool, then determining that the source alarm is the last searched alarm.

The correspondence relationship between the alarm and its corresponding alarm solution is preset in the system.

For example, for the correlation set in FIG 2, assuming that alarm B is generated currently, in the examining process for alarm B, it is judged whether to generate alarm A currently, if alarm A is generated, then alarm A is used as the source alarm of alarm B, an alarm solution corresponding to alarm A is used as the solution of alarm B currently examined, a recovery processing is performed, obviously, if alarm A is recovered, then alarm B is recovered; if alarm A is not generated currently, then alarm A does not need to be recovered, the alarm solution corresponding to alarm B is used as the solution of alarm B currently examined, then the recovery processing is performed.

As another example, for the correlation set in FIG 3, assuming that an alarm pool is {alarm J, alarm G, alarm F, alarm I}, the users need to examine the solution of alarm J of therein. First, according to the correlation shown in FIG 3, it is to examine the source alarm which leads to alarm J, it can be obtained from FIG 3 that alarm G can lead to alarm J, and it can be known from the alarm pool that alarm G is in the alarm pool, therefore, it is determined that the reason for generating alarm J is alarm G; secondly, it is to continue to examine the alarm which can lead to alarm G, it will be found that it may be caused by alarm C, and by examining the alarm pool, it is determined that alarm C does not exist, therefore, it is believed that the generation of alarm G is caused by itself, at last, it can be known that alarm G is the source alarm of alarm J, and the alarm solution corresponding to alarm G is used as the solution of alarm J.

For another instance, for the correlation set in FIG 3, assuming an alarm pool is {alarm B, alarm C, alarm F}, the users need to examine the solution of alarm F of therein. First, according to the correlation shown in FIG 3, it is to examine the source alarm which leads to alarm F, it can be obtained from FIG 3 that the alarms which will lead to alarm F comprise alarm B, alarm C and alarm F itself, and alarm B and alarm C are in the alarm pool, then it is to examine the related alarm which leads to alarm B and alarm C, respectively, it will be found that alarm A leads to both of the alarms, but alarm A does not exist in the alarm pool, at last, it is determined that alarm B and alarm C are both the source alarms which lead to alarm F, therefore, the alarm solutions corresponding to alarm B and alarm C respectively are used as the solutions of alarm F currently examined.

It can be seen from the invention, by means of the correlations preset among alarms, a source alarm of an alarm currently examined will be found, and an alarm solution corresponding to the found source alarm is used as a solution for the alarm currently examined, thus an accurate locating for the alarm is assured, so that the maintainers are enabled to eliminate the alarm quickly by using a correct solution. In the method of the invention, the alarm locating is completed automatically, which not only improves the efficiency of problem processing, but also increases the accuracy of problem processing. For the network manager, the problem that the maintainers are required to know professional detail knowledge about software and hardware is avoided, and the problem of alarm processing is solved quickly and accurately.

For the method of the invention, there is provided a device for obtaining an alarm solution. FIG 4 is a schematic diagram of the component and structure of the device for obtaining an alarm solution of the invention, as shown in FIG 4, it comprises a setting module, a locating module, a judging module and an alarm solution generating module, wherein,
the setting module is used for storing the correlations indicating the causality among the alarms;
the locating module is used for searching for an alarm which relates to an alarm currently examined according to the correlations stored in the setting module, and outputting the related alarm to the judging module; or searching for an alarm which relates to the current related alarm when receiving the existence notification, and outputting the related alarm to the judging module;
the judging module is used for judging whether the received related alarm is existed in an alarm pool to which the alarm currently examined belongs, if yes, transmitting the existence notification to the locating module; if not, transmitting inexistence notification to the alarm solution generating module;
the alarm solution generating module is used for determining the current related alarm as the source alarm when receiving inexistence notification, and using the alarm solution corresponding to the searched source alarm as the solution for the alarm currently examined to output. The correspondence relationship between an alarm and its corresponding alarm solution is preset in the alarm solution generating module.

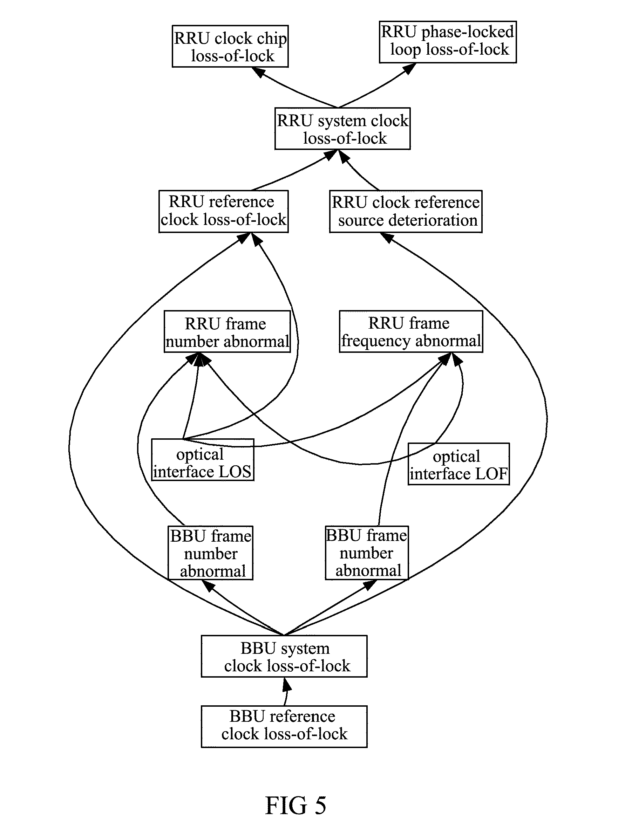

Taking the LTE system as an example below, the implementation process of the method is described in details. FIG 5 is a schematic diagram of the correlations of an embodiment for obtaining an alarm solution of the invention, as shown in FIG 5, here taking LTE clock related alarm as an example, and the implementation process for obtaining an alarm solution is described in details. LTE clock related alarm comprises BBU reference clock loss-of-lock, BBU system clock loss-of-lock, RRU reference clock loss-of-lock, RRU clock chip loss-of-lock, RRU clock reference source deterioration, RRU phase-locked loop loss-of-lock, RRU/BBU frame number abnormal, RRU/BBU frame frequency abnormal, optical interface LOS alarm, optical interface LOF alarm. The correlations among them are shown in FIG 5. And assuming the alarm solutions corresponding to various alarms are preset.

In the embodiment, assuming the correlation is presented by means of a relation table. There are many ways to set the relation table, and one relation table is set for each alarm respectively here. Assuming the table is set starting from the alarm of the highest level, first, it is RRU clock chip loss-of-lock, the source alarm of RRU clock chip loss-of-lock is RRU system clock loss-of-lock, which can be described by the structure {alarm name, source alarm 1, source alarm 2, source alarm 3, source alarm 4}. It need to be illustrated that, as one alarm can have a plurality of source alarms, therefore, a structure with a fixed length or a structure with a variable length can be applied, for the purpose of simplicity, assuming a structure with a fixed length being 5 is applied.

For RRU clock chip loss-of-lock, its correlation structure is {RRU clock chip loss-of-lock, RRU system clock loss-of-lock, null, null, null}; also, for RRU phase-locked loop loss-of-lock, its correlation structure is {RRU phase-locked loop loss-of-lock, RRU system clock loss-of-lock, null, null, null}; for RRU system clock loss-of-lock, its correlation structure is {RRU system clock loss-of-lock, RRU reference clock loss-of-lock, RRU clock reference source deterioration, null, null}, the rest can be done in the same manner, the correlation structures of all alarms are as below:

```
     {
     {RRU clock chip loss-of-lock, RRU system clock loss-of-lock, null, null,
 null};
     {RRU phase-locked loop loss-of-lock, RRU system clock loss-of-lock, null,
 null, null};
     {RRU system clock loss-of-lock, RRU reference clock loss-of-lock, RRU
 clock reference source deterioration, null, null};
     {RRU reference clock loss-of-lock, optical interface LOS alarm, BBU
 system clock loss-of-lock, null, null};
     {RRU clock reference source deterioration, BBU system clock loss-of-lock,
 null, null};
     {RRU frame number abnormal, optical interface LOS, optical interface LOF,
 BBU frame number abnormal, null};
     {RRU frame frequency abnormal, BBU frame frequency abnormal, optical
 interface LOF, null, null}
     {Optical interface LOS, null, null, null};
     {Optical interface LOF, null, null, null};
     {BBU frame number abnormal, BBU system clock loss-of-lock, null, null};
     {BBU frame frequency abnormal, BBU system clock loss-of-lock, null,
 null};
     {BBU system clock loss-of-lock, BBU reference clock loss-of-lock, null,
 null};
     {BBU reference clock loss-of-lock, null, null, null};
     }
```

Assuming the base station generates 5 alarms currently, the alarm pool is {RRU clock chip loss-of-lock, RRU system clock loss-of-lock, RRU reference clock loss-of-lock, RRU frame frequency abnormal, BBU system clock loss-of-lock}.

Assuming the alarm currently examined is RRU clock chip loss-of-lock, first, it is to examine the correlation alarm of RRU clock chip loss-of-lock in the relation table, from the correlation structure of RRU clock chip loss-of-lock, it can be known that the alarm of RRU clock chip loss-of-lock may be caused by RRU system clock loss-of-lock, and it can be seen from the alarm pool that there is RRU system clock loss-of-lock; secondly, it is to continue to examine the correlation structure of RRU system clock loss-of-lock in the relation table, it can be known from the structure that the alarm for RRU system clock loss-of-lock has two related alarms, i.e. RRU reference clock loss-of-lock and RRU clock reference source deterioration, respectively, it can be seen from the alarm pool that RRU reference clock loss-of-lock exists in the alarm pool, RRU clock reference source deterioration does not exists in the alarm pool; then, it is to continue to examine the correlation structure of RRU reference clock loss-of-lock in the relation table, it can be known from the structure that this alarm also have two related alarms, i.e. optical interface LOS alarm, BBU system clock loss-of-lock, it can be seen from the alarm pool that optical interface LOS alarm does not exist, and BBU system clock loss-of-lock exists; it is still to continue to examine the correlation structure of BBU system clock loss-of-lock in the relation table, it will be found that the related alarm of BBU system clock loss-of-lock is BBU reference clock loss-of-lock, but it can be seen from the alarm pool that the alarm of BBU reference clock loss-of-lock does not exists in the alarm pool, at last, it it to determine that BBU system clock loss-of-lock is the source alarm which leads to RRU clock chip loss-of-lock, and the solution for BBU system clock loss-of-lock is used as the alarm solution for RRU clock chip loss-of-lock which is currently examined.

When the users want to examine the solution for RRU clock chip loss-of-lock alarm, the information which is displayed for the users by employing the method of the present invention is: the solution for BBU system clock loss-of-lock.

The foregoing is only the preferable embodiment of the present invention, and is not used to limit the protection scope of the invention, any modification, equivalent alternative and improvement and so on made within the spirit and principle of the invention should be all included in the protection scope of the invention.

## Claims

1. A method for obtaining an alarm solution, comprising presetting correlations indicating causality among alarms, the method further comprising:
searching for a source alarm corresponding to an alarm currently examined according to the correlations, and using an alarm solution corresponding to the searched source alarm as a solution for the alarm currently examined.

2. The method according to claim 1, wherein a way for presetting correlations indicating causality among alarms is:
judging whether a generation of an alarm is caused by other alarms according to a reason which causes the generation of each alarm, and if yes, then setting the correlations between this alarm and other alarms which lead to this alarm.

3. The method according to claim 2, wherein the correlations are indicated by means of a relation table.

4. The method according to claim 1, wherein a way for searching for a source alarm corresponding to an alarm currently examined is:
searching for an alarm which has a correlation with the alarm currently examined according to the correlations, and judging whether the searched alarm exists in a current alarm pool, if yes, then continuing to search for an alarm which has the correlation with the searched alarm, until a last searched alarm does not exist in the current alarm pool, then determining that the source alarm is the last searched alarm.

5. The method according to claim 1 or 4, wherein a number of the source alarms is one or more than one.

6. The method according to claim 1, comprising, before the method, a step of: setting a correspondence relationship between an alarm and an alarm solution corresponding to this alarm.

7. A device for obtaining an alarm solution, comprising a setting module, a locating module, a judging module and an alarm solution generating module, wherein,
the setting module is used for storing preset correlations indicating causality among alarms;
the locating module is used for searching for an alarm which relates to an alarm currently examined according to the correlations stored in the setting module, and outputting the related alarm to the judging module; or searching for an alarm which relates to the current related alarm when receiving an existence notification, and outputting the related alarm to the judging module;
the judging module is used for determining whether a received related alarm exists in an alarm pool to which the alarm currently examined belongs, if yes, transmitting the existence notification to the locating module; if not, transmitting an inexistence notification to the alarm solution generating module;
the alarm solution generating module is used for determining that a current related alarm is a source alarm when receiving the inexistence notification, and using an alarm solution corresponding to the searched source alarm as a solution for the alarm currently examined to output.

8. The device according to claim 7, wherein the correlations are indicated by means of a relation table.

9. The method according to claim 7, wherein a number of the source alarms is one or more than one.

10. The method according to claim 7, wherein a correspondence relationship between an alarm and an alarm solution corresponding to this alarm is preset in the alarm solution generating module.
